# FASCICULE DE BREVET EUROPEEN

(11) **EP 2 086 894 B1**
(45) Date de publication et mention de la délivrance du brevet: **09.09.2015**
(21) Numéro de dépôt: 07858662.5
(22) Date de dépôt: 05.11.2007
(51) Int. Cl.: C03B 18/02

(54) **METHODE DE FABRICATION D'UN VERRE FLOTTE PRECURSEUR DE VITROCERAMIQUE**
VERFAHREN ZUR HERSTELLUNG EINES IN EINE GLASKERAMIK UMWANDELBAREN FLOATGLASES
PROCESS OF MAKING A FLOAT GLASS PRECURSOR OF A GLASS CERAMIC

(30) Priorité: 07.11.2006 FR 0654760
(43) Date de publication de la demande: 12.08.2009
(73) Titulaire: Eurokera, 77640 Jouarre (FR)
(72) Inventeur: GOULAS, Catherine, 75013 Paris (FR); JACQUES, Rémi, 60190 Estrees Saint Denis (FR); QUEREL, Gilles, Worcester, Massachussetts 01605 (US)
(74) Mandataire: Colombier, Christian
(86) Numéro de dépôt international: PCT/FR2007/052299
(87) Numéro de publication internationale: WO 2008/056080

(56) Documents cités:
- DE-B3-102005 033 908
- US-A- 3 954 432
- US-A- 6 096 670
- US-A1- 2002 023 463
- US-B1- 6 376 084

## Description

L'invention concerne la fabrication de verre plat (ou plan) par flottage, ledit verre étant un précurseur de vitrocéramique.

Les vitrocéramiques sont des matières riches en silice comprenant au moins une phase cristalline et obtenues après un traitement thermique de céramisation à partir d'un verre précurseur (ou verre-mère). Les vitrocéramiques présentent un très faible coefficient de dilatation linéaire, généralement inférieur à 15.10⁻⁷ K⁻¹. La vitrocéramique peut comprendre au moins 50% en masse de silice. Une famille importante de vitrocéramique est celle comprenant à la fois SiO₂, Al₂O₃ et Li₂O pour laquelle le traitement de céramisation mène à des cristaux de bêta eucryptite ou bêta spodumène ou bêta quartz.

Ces vitrocéramiques, translucides ou opaques, trouvent une utilité notamment comme plaques de cuisson ou plaques anti-feu, et plus généralement dans des utilisations nécessitant un verre à très faible coefficient de dilation. Les vitrocéramiques présentent cependant l'inconvénient d'avoir une forte tendance à la dévitrification à chaud, ce qui entraîne habituellement de nombreuses interventions de maintenance des installations de formage. En effet, les plaques ou feuilles de vitrocéramiques sont habituellement réalisées par laminage entre des rouleaux métalliques et des dépôts de dévitrifications abîment la surface desdits rouleaux. Ceux-ci doivent donc être périodiquement rectifiés (même tous les 2 à 3 jours) voire remplacés. Les installations de formage des vitrocéramiques sont donc habituellement conçues pour rendre aisées les interventions de maintenance, ce qui implique une grande accessibilité aux rouleaux de laminage, au cours même de la fabrication. Il est ainsi impensable pour l'homme du métier de former les vitrocéramiques dans des installations gigantesques dont le coeur reste inaccessible en cours de fonctionnement comme c'est le cas des installations de flottage du verre. En effet ces installations font plusieurs dizaines de mètres voire plusieurs centaines de mètres de longueur pour plusieurs mètres de largeur et les temps de transition à la mise en route et à l'arrêt sont considérables. De telles installations doivent donc fonctionner en permanence et un arrêt pour maintenance est catastrophique et rédhibitoire. Les installations classiques de formage des vitrocéramiques par lamination entre rouleaux ne permettent par ailleurs pas de réaliser des feuilles très larges. La largeur est limitée à moins de 700 mm. On a cependant besoin aujourd'hui de plaques de plus grandes largeurs. De même, ce procédé de laminage ne permet pas la réalisation de feuilles très fines à l'épaisseur inférieure à 3 mm.

On a effectivement pu constater que le flottage d'une vitrocéramique ne pouvait pas être réalisée comme on le fait habituellement pour un verre classique du type silicosodocalcique, en coulant le verre vers 1050°C. En effet, une dévitrification ne manque pas de se produire, notamment dans la zone où le verre est coulé sur le bain métallique de flottage. Rappelons que dans la fabrication d'un ruban de verre flotté en vue de la réalisation de feuilles de verre plat, du verre fondu est déversé sur un bain de métal fondu, généralement d'étain ou d'un alliage à prédominance d'étain, où il forme ledit ruban continu qui se refroidit progressivement et est extrait à l'aide de rouleaux extracteurs qui l'acheminent dans un four de recuisson appelé étenderie. La zone couvrant le ruban de verre lorsque celui-ci défile sur le bain de métal fondu est encombrée de systèmes de chauffage et de systèmes de refroidissement qui sont prévus pour conditionner la température et plus précisément la viscosité du verre pour permettre son étirage à l'épaisseur voulue puis son figeage.

Pour pallier au problème de dévitrification inopiné d'un verre précurseur de vitrocéramique au cours du flottage, le WO2005/07318 préconise de supprimer les points fixes de verre flotté, notamment en y déversant du métal fondu, ce qui nécessite l'installation de canalisations spéciales pour le métal fondu.

Le DE-B-102005033908 enseigne un procédé de fabrication d'un ruban de verre précurseur de vitrocéramique par flottage. Le refroidissement du verre est exercé selon une formule calculée à partir de la température de vitesse de dévitrification maximale et la température à laquelle elle redevient quasi nulle. Dans l'exemple concret de réalisation, le verre est déversé sous la température de dévitrification et la vitesse en question est de 48°C/minute.

Le US3684475 enseigne le passage d'une bande de verre laminée sur un bain de métal. Il n'y a donc pas là de déversement de verre fondu. Un tel laminage à ces températures très élevées ne permet pas l'obtention de feuilles de verre larges et/ou épaisses.

Le US2002/0023463 enseigne une composition particulière de vitrocéramique susceptible d'être flottable sans cristallisation superficielle. Ce document enseigne notamment qu'un appauvrissement en ZnO en surface génére une dévitrification. Le verre reste longtemps à flotter (30 à 40 min) de sorte que la vitesse de refroidissement du verre est inférieure à 18°C/min.

Comme autres documents, on peut citer les US3539320, US4115091, US3718450 et la demande brevet français n° 0554052.

On a maintenant découvert que l'on pouvait utiliser une installation classique de flottage du verre pour flotter un verre précurseur de vitrocéramique, même si sa composition est classique. Selon l'invention, deux conditions sont à respecter :
a) le verre est coulé à une température supérieure à sa température de début de dévitrification, et
b) la vitesse de refroidissement du verre est d'au moins 18°C/min et inférieure à 48°C/min entre d'une part le moment t1 ou le verre est à la température de vitesse maximum de dévitrification, et d'autre part le moment t2 (t2 venant après le moment t1, c'est-à-dire que t2 est subséquent à t1) ou le verre est à la température à laquelle la vitesse de croissance de cristaux de dévitrification devient inférieure à 1 micromètre par minute.

Les conditions a) et b) ci-dessus font appel à des paramètres de dévitrification (température et vitesse de croissance de cristaux), alors que justement aucune dévitrification n'a lieu grâce au procédé selon l'invention. C'est pourquoi on peut aussi parler de températures théoriques. En fait, il convient de déterminer préalablement ces paramètres avant de faire fonctionner le procédé selon l'invention, en procédant à des essais de dévitrification sur des échantillons de la composition souhaitée. En effet, ces paramètres peuvent varier selon la composition du verre. Pour les déterminer, on place des échantillons de verre dans des creusets que l'on chauffe à une température suffisamment élevée pour qu'aucune dévitrification ne puisse intervenir (en général 1500°C et même 140°C suffisent), on laisse refroidir jusqu'à une température T à laquelle on observe un palier d'une durée t, et l'on refroidit rapidement. En variant T et t, on peut déterminer la température de début de dévitrification et la vitesse de dévitrification. On peut également utiliser la DSC pour connaître les températures et vitesses maximales de dévitrification. Les tailles de cristaux dans les échantillons sont déterminées par observation visuelle au microscope binoculaire. Le moment t2 est après le moment t1.

Pour remplir la condition a), il suffit généralement de porter le verre à au moins 1380 °C, et de préférence au moins 1400°C et même au moins 1450°C, pour le couler sur le métal fondu en amont de l'enceinte de flottage. Le verre coulé vient généralement directement du four de fusion sans solidification entre le four et l'enseinte de flottage.

La vitesse de refroidissement du verre est d'au moins 18°C/min entre le moment t1 et le moment t2. Cette vitesse, entre t1 et t2 est inférieure à 48°C/min et peut même être inférieure à 40°C/min, voire même inférieure à 30°C/min, voire même inférieure à 28°C/min.

Comme pour un verre silicosodocalcique ordinaire, on maintient dans l'enceinte de flottage une atmosphère gazeuse légèrement réductrice, par exemple un mélange N2/H2 contenant de 1 à 12 % d'hydrogène (en volume normaux ou NI). L'atmosphère gazeuse est généralement renouvelée dans l'enceinte de flottage à la vitesse de 3 à 250 fois par heures.

Pour le flottage d'un verre silicosodocalcique ordinaire, le bain de métal est à environ 1000°C. Dans le cadre de l'invention, il est généralement nécessaire que le métal fondu soit à plus de 1150°C et même plus de 1200°C et même plus de 1250°C, en surface à l'endroit de la coulée. De bons résultats ont été obtenus avec une température de 1250°C mesurée à 3 cm sous la surface de métal fondu à l'endroit ou le verre est coulé, ce qui signifie que la température est supérieure à la surface elle-même. En s'écoutant vers l'aval de l'enceinte de flottage, le verre à tendance à entraîner le métal vers l'aval également. Dans le procédé de flottage le plus classique (art antérieur), le métal retourne vers l'amont par un courant plus profond, ce mouvement étant généralement qualifié de boucle de circulation. Cependant, dans le cadre de la présente invention, sachant qu'il convient de respecter une vitesse minimale de refroidissement du verre au cours de sa traversée dé l'enceinte, il est recommandé que le métal, fondu baisse également en température de l'amont vers l'aval. C'est pourquoi, au lieu d'avoir une seule boucle de circulation du métal fondu entre l'aval et l'amont, on peut préférer avoir au moins deux boucles de circulation successives sur le chemin du verre, gràce à un barrage noyé dans le métal fondu dans une zone intermédiaire du bain. Ce barrage peut notamment être en molybdène revêtu d'une couche protectrice, par exemple d'alumine. Ainsi, on peut avoir une boucle de circulation plus chaude vers l'amont et une boucle de circulation moins chaude vers l'aval. On peut aussi constituer de la même manière au moins trois boucles de circulation successives du métal fondu. L'évolution de la température de l'amont vers l'aval est réglé à partir des éléments de chauffage placé au-dessus du verre tout au long de l'installation. On cherche généralement à ce qu'à l'endroit ou le verre se sépare du métal (point de contact verre/métal fondu le plus en aval), le verre ait une température comprise entre 730 et 850 °C. De préférence, on coule le verre en amont à une température telle que le logarithme décimal de sa viscosité en poises va de 3,4 à 3,9. De préférence, à l'endroit ou le verre se sépare du métal (point de contact verre/métal fondu le plus en aval), le verre a une température telle que le logarithme décimal de sa viscosité en poises va de 11 à 12.

Dans le procédé classique de fabrication de vitrocéramique plane par laminage, le verre précurseur contient généralement de l'arsenic sous forme oxydée en tant qu'affinant. La présence d'arsenic dans le verre précurseur à transformer selon l'invention est déconseillée car l'atmosphère gazeuse de l'installation de flottage pourrait alors se charger de gaz toxique. On conseille donc d'utiliser un autre affinant comme SnO₂. De façon inattendue, il a été observé que le verre précurseur enrichi en SnO₂ et transformé en verre plat conformément à l'invention menait à une vitrocéramique à la dureté améliorée. Le verre précurseur peut ainsi comprendre 0 à 0,5 % en poids de SnO₂. Le verre précurseur contient de préférence moins de 100 ppm en poids de As₂O₃. Le verre précurseur peut ne pas comprendre d'antimoine ou comprendre moins de 100 ppm en poids de Sb₂O₃.

Le verre précurseur peut ne pas comprendre d'étain. Notamment, il peut s'agir d'un verre dont la composition est celle revendiquée dans la demande de brevet français n° 0554052, c'est-à-dire un verre à la composition suivante :

| | |
|---|---|
| SiO₂ | 52 - 75 % en poids |
| Al₂O₃ | 18 - 27 % en poids |
| Li₂O | 2,5 - 5,5 % en poids |
| K₂O | 0 - 3 % en poids |
| Na₂O | 0 - 3 % en poids |
| ZnO | 0 - 3,5 % en poids |
| MgO | 0 - 3 % en poids |
| CaO | 0 - 2,5 en poids |
| BaO | 0 - 3,5 % en poids |
| SrO | 0 - 2 % en poids |
| TiO₂ | 1,2 - 5,5 % en poids |
| ZrO₂ | 0 - 3 % en poids |
| P₂O₅ | 0 - 8 % en poids |

Le verre précurseur peut cependant contenir de l'étain sous forme oxydée, jouant notamment le rôle d'affinant. Généralement, la teneur en SnO₂ va alors de 0,1 à 0,5 % en poids. On a observé que la face en contact avec le métal s'enrichissait en étain. Lors d'un essai, on a notamment observé que la concentration en SnO₂ augmentait sur une profondeur de 150 nm pour passer de 0,2 % en poids à moins de 150 nm d'épaisseur à 10% en poids à la surface. Après flottage selon l'invention, le verre présente un gradient de surface en SnO₂ dont la teneur diminue en direction du coeur du verre. On estime que dans une épaisseur de surface de 150 nm, la concentration en SnO₂ passe localement par une concentration d'au moins 5 % en poids, voire d'au moins 8 % en poids, et généralement d'au plus 12% en poids. L'augmentation de la résistance mécanique de surface, mesurée par indentation, sur la vitrocéramique, pouvant avoir pour origine cet enrichissement est illustrée par les exemples ci-dessous.

On a comparé deux vitrocéramiques de même composition, l'une étant réalisée selon l'invention, l'autre étant réalisée par le procédé classique de laminage. Ces vitrocéramiques avaient toutes deux pour composition globale:

| Ingrédient | %poids |
|---|---|
| Alumine Al₂O₃ | 19 |
| Oxyde d'Arsenic As₂O₃ | 0,01 |
| Baryte BaO | 0,8 |
| Chaux CaO | 0,1 |
| Fer total exprimé en Fe₂O₃ (dont 0,006 de fer réducteur FeO) | 0,033 |
| Potasse K₂O | 0,2 |
| Oxyde de Lithium Li₂O | 3,5 |
| Magnésie MgO | 1,2 |
| Soude Na₂O | 0,2 |
| Silice dosée SiO₂ | 68,65 |
| Oxyde d'Etain SnO₂ | 0,19 |
| Oxyde de Titane TiO₂ | 2,6 |
| Oxyde de Vanadium V₂O₅ | 0,06 |
| Oxyde de Zinc ZnO | 1,6 |
| Oxyde de Zirconium ZrO₂ | 1,8 |

On a constaté à partir de résultats de micro-indentation (pointe Vickers appliquée à différentes charges) dans le cadre de l'évaluation de la dureté mécanique, que les vitrocéramiques flottées (après céramisation du verre flotté puis vieillissement 1000h à 725°C) présentent un affaiblissement mécanique deux fois moins important en face étain (face ayant été en contact avec le bain d'étain) par rapport à la vitrocéramique laminée de même composition chimique.

Le verre peut comprendre du ZnO, généralement jusqu'à 3,5 % en poids. On a observé que le procédé selon l'invention faisait diminuer la teneur de surface du ZnO, du côté en contact avec l'atmosphère gazeuse (pas celle en contact avec le bain métallique). En effet, à titre d'exemple, un verre contenant à coeur (par exemple au milieu de l'épaisseur du verre) en moyenne 2% en poids de ZnO voyait sa concentration réduite progressivement à 0% à la surface, alors qu'à plus de 10 micromètres, la teneur en ZnO est de 2% en poids. Or cet appauvrissement en surface ne s'est pas traduit par la moindre dévitrification, contrairement à l'enseignement du US2002/0023463.

Le verre précurseur (et la vitrocéramique qui en dérive) peut ne pas contenir de colorant. On a en effet besoin de vitrocéramique transparente notamment pour les inserts de cheminée et les portes coupe-feu. Cependant pour nombre d'autres applications, la vitrocéramique doit être opaque dans le domaine du visible mais le plus transparente possible vis-à-vis des infra-rouges. Par exemple pour une table de cuisson, la vitrocéramique cache à la vue les éléments chauffants placés sous elle, mais laisse passer le plus possible de rayonnement chauffant pour la cuisson (les résistances chauffantes deviennent néanmoins visibles à travers la plaque de vitrocéramique dès qu'elles sont rouges).

Lorsque l'on cherche à obtenir une vitrocéramique de couleur et/ou présentant une transmission infrarouge plus faible, au moins un des agents colorants suivants peut être ajouté dans la composition de verre :

| | |
|---|---|
| Fe₂O₃ | jusqu'à 1% et plus généralement 0,2 à 0,9% en poids |
| NiO | jusqu'à 1% et plus généralement 0,2 à 0,9% en poids |
| Cr₂O₃ | jusqu'à 1% et plus généralement 0,2 à 0,9% en poids |
| Cul | jusqu'à 1% et plus généralement 0,2 à 0,9% en poids |
| CoO | jusqu'à 1% et plus généralement 0,2 à 0,9% en poids |
| Mn₃O₄ | jusqu'à 1 % et plus généralement 0,2 à 0,9% en poids |
| V₂O₅ | jusqu'à 1% et plus généralement 0,2 à 0,9% en poids |

et la somme totale des agents colorants n'excédant généralement pas 2 %. V₂O₅ est un agent colorant préféré car il permet de doter la vitrocéramique finale de propriétés spécifiques qui sont recherchées notamment pour une application en tant que plaque de cuisson. Outre un aspect noir en réflexion et une teinte brune à nuance rouge en transmission appréciés sur un plan esthétique, V₂O₅ confère à la vitrocéramique une faible transmission dans le visible et une transmission infrarouge (IR) élevée. La transmission dans le visible peu élevée fait que l'utilisateur n'est pas ébloui par les éléments chauffants sous-jacents, et la transmission infrarouge élevée rend possible la détection visuelle de l'élément chauffant lorsqu'il est en fonctionnement et facilite le réglage des conditions de cuisson.

Les vitrocéramiques chargées par un colorant présentent l'inconvénient de voir leur couleur se modifier lentement avec le temps, ce qui est généralement lié à une évolution du degré d'oxydation du colorant. Ce vieillissement non désiré se traduit par une modification de la coloration aux endroits qui ont été le plus chauffés au cours de l'utilisation. Ainsi, dans le cas de plaques de cuisson, le chauffage répété par les résistances, toujours aux mêmes endroits, entraîne la formation de marques visibles prenant la forme desdites résistances. Dans le cas du colorant V₂O₅ , c'est la lente évolution vers V₃O₂ qui entraîne la formation de marques plus foncées. La résistance au vieillissement peut être testée par des traitements thermiques accélérés faisant intervenir des températures plus élevées que l'utilisation envisagée ne l'aurait fait. Un test habituel consiste en un chauffage de 1000 heures à 725°C à la suite de quoi la capacité de la vitrocéramique à transmettre les IR est mesurée.

De façon inattendue, on a constaté qu'à composition identique, une plaque de vitrocéramique plane préparée selon le présent procédé vieillissait beaucoup moins rapidement qu'une vitrocéramique préparée par le procédé classique de formage par laminage. Sans que cette explication ne puisse limiter la portée de la présente demande, il semble que l'atmosphère légèrement réductrice utilisée pendant le flottage puisse être à l'origine de cette propriété. En effet, on a constaté que les deux faces de la plaque présentaient une couche plus foncée que le coeur, la couche ayant été en contact avec l'atmosphère de l'enceinte de flottage étant nettement plus épaisse. L'invention permet l'obtention d'une plaque de verre précurseur de vitrocéramique comprenant un élément colorant multivalent présentant, uniformément sur au moins une face principale de ladite plaque, un état plus réduit en surface qu'à coeur, ladite face principale ayant une aire d'au moins 100 cm² et pouvant même être supérieure à 200 cm² et même supérieure à 400 cm². Notamment, l'état plus réduit va de la surface jusqu'à une profondeur allant de 100 à 300 µm. L'invention permet l'obtention d'une plaque de vitrocéramique comprenant un élément colorant multivalent présentant, uniformément sur au moins une face principale de ladite plaque, un état plus réduit en surface qu'à coeur, ladite face principale ayant une aire d'au moins 100 cm² et pouvant même être supérieure à 200 cm² et même supérieure à 400 cm².

A titre d'exemple, lors d'un essai avec une vitrocéramique chargée de 0,7% de V₂O₅ , on a observé une couche plus foncée de 120 µm en face atmosphère et une couche de 10 µm en face étain. II semble que la formation de cette couche, uniformément sur toute la surface ralentisse le vieillissement par la suite. Les exemples du tableaux ci-dessous illustrent cet effet. Ce tableau compare les transmissions IR (en % et selon la norme EN410 sous 3 mm) mesurées sur des plaques de même composition (composition déjà donnée ci-dessus) avant et après le test de vieillissement de 1000 h à 725°C :

| | **Avant vieillissement** | **Après vieillissement** | **% de baisse** |
|---|---|---|---|
| **Vitrocéramique laminée** | 73 | 66 | 9,6 % |
| **Vitrocéramique flottée (selon l'invention)** | 72,3 | 71,5 | 1,1 % |

Dans l'exemple selon l'invention, la vitesse de refroidissement entre les moments t1 et t2 était de 25°C/min.

Le flottage du verre selon l'invention mène à un verre qui n'est pas encore une vitrocéramique, mais qu'il convient de transformer dans une étape supplémentaire bien connue de l'homme du métier. En effet, la structure particulière de vitrocéramique est réalisée par un traitement thermique spécifique (dit de céramisation) postérieur au formage en feuille/plaque et même généralement postérieur à la découpe longitudinale et transversale du ruban flotté.

A titre d'exemple, pour une vitrocéramique à base de SiO₂-Al₂O₃-Li₂O, on peut généralement réaliser le traitement de céramisation de la façon suivante:
a) élévation de la température à la vitesse de 30 à 80°C/minute jusqu'au domaine de nucléation, généralement situé au voisinage du domaine de transformation du verre ;
b) traversée de l'intervalle de nucléation (670 - 800°C) en 15 à 25 minutes;
c) élévation de la température à la vitesse de 15 à 30°C/minute jusqu'à la température du palier de céramisation généralement comprise entré 900 et 1100 °C ;
d) maintien de la température du palier de céramisation pendant une durée de 10 à 25 minutes ;
e) refroidissement rapide jusqu'à la température ambiante.

Au bout du cycle de céramisation, la plaque de verre contient la phase cristalline caractéristique de la structure vitrocéramique.

Après découpe du ruban (céramisé ou non), les plaques obtenues présentent deux surfaces principales (et une tranche de 4 petites surfaces) dont l'aire est supérieur à 100 cm² et généralement supérieure à 1000 cm².

## Revendications

1. Procédé de fabrication d'un ruban plan de verre précurseur de vitrocéramique comprenant le flottage en continu du verre fondu sur un bain de métal fondu dans une enceinte de flottage, ledit verre étant déversé à l'état fondu à une température supérieure à sa température de début de dévitrification sur le métal fondu en amont de l'enceinte, ledit verre formant progressivement un ruban défilant sur ledit bain de métal, la vitesse de refroidissement du verre étant d'au moins 18°C/min et inférieure à 48°C/min entre d'une part le moment t1 où le verre est à la température théorique de vitesse maximum de dévitrification, et d'autre part le moment t2 subséquent où le verre est à la température théorique à laquelle la vitesse de croissance de cristaux de dévitrification devient inférieure à 1 micromètre par minute.

2. Procédé selon la revendication précédente, **caractérisé en ce que** la vitesse de refroidissement du verre est inférieure à 40°C/min entre t1 et t2.

3. Procédé selon la revendication précédente, **caractérisé en ce que** la vitesse de refroidissement du verre est inférieure à 30°C/min entre t1 et t2.

4. Procédé selon la revendication précédente, **caractérisé en ce que** la vitesse de refroidissement du verre est inférieure à 28°C/min entre t1 et t2.

5. Procédé selon l'une des revendications précédentes, **caractérisé en ce que** le verre est porté à au moins 1380°C pour être déversé sur le métal fondu.

6. Procédé selon l'une des revendications précédentes, **caractérisé en ce que** le verre est porté à au moins 1400°C pour être déversé sur le métal fondu.

7. Procédé selon l'une des revendications précédentes, **caractérisé en ce qu'**une atmosphère gazeuse comprenant un mélange N₂/H₂ contenant de 1 à 12 % d'hydrogène en volume normaux est maintenu dans l'enceinte de flottage.

8. Procédé selon l'une des revendications précédentes, **caractérisé en ce que** le bain de métal est à plus de 1150°C, voire plus de 1250°C, en surface à l'endroit de la coulée du verre.

9. Procédé selon l'une des revendications précédentes, **caractérisé en ce qu'**à l'endroit en sortie ou le verre se sépare du métal, le verre a une température comprise entre 730 et 850 °C.

10. Procédé selon l'une des revendications précédentes, **caractérisé en ce que** le verre est coulé à une température telle que le logarithme décimal de sa viscosité en poises va de 3,4 à 3,9.

11. Procédé selon l'une des revendications précédentes, **caractérisé en ce que** à l'endroit ou le verre se sépare du métal, le verre a une température telle que le logarithme décimal de sa viscosité en poises va de 11 à 12.

12. Procédé selon l'une des revendications précédentes, **caractérisé en ce que** la teneur en SnO₂ du verre va de 0,1 à 0,5 % en poids.

## Patentansprüche

1. Verfahren zur Herstellung eines flachen Bandes aus einem Glaskeramik-Glasvorläufer, umfassend das kontinuierliche Floaten der Glasschmelze auf einem Bad aus geschmolzenem Metall in einer Floatkammer, wobei das Glas in geschmolzenem Zustand bei einer Temperatur, die höher ist als seine Temperatur zu Beginn der Entglasung, auf das geschmolzene Metall stromaufwärts der Kammer gegossen wird, wobei das Glas progressiv ein Band bildet, das auf dem Metallbad läuft, wobei die Abkühlungsgeschwindigkeit des Glases zwischen einerseits dem Zeitpunkt t1, wo das Glas die theoretische Temperatur der maximalen Geschwindigkeit der Entglasung hat, und andererseits dem anschließenden Zeitpunkt t2, wo das Glas die theoretische Temperatur hat, bei der die Wachstumsgeschwindigkeit der Entglasungskristalle kleiner als 1 Mikrometer pro Minute wird, mindestens 18 °C/min. und weniger als 48 °C/min. beträgt.

2. Verfahren nach dem vorhergehenden Anspruch,
**dadurch gekennzeichnet, dass**
die Abkühlungsgeschwindigkeit des Glases zwischen t1 und t2 weniger als 40 °C/min. beträgt.

3. Verfahren nach dem vorhergehenden Anspruch,
**dadurch gekennzeichnet, dass**
die Abkühlungsgeschwindigkeit des Glases zwischen t1 und t2 weniger als 30 °C/min. beträgt.

4. Verfahren nach dem vorhergehenden Anspruch,
**dadurch gekennzeichnet, dass**
die Abkühlungsgeschwindigkeit des Glases zwischen t1 und t2 weniger als 28 °C/min. beträgt.

5. Verfahren nach einem der vorhergehenden Ansprüche,
**dadurch gekennzeichnet, dass**
das Glas auf mindestens 1.380 °C gebracht wird, um auf das geschmolzene Metall gegossen zu werden.

6. Verfahren nach einem der vorhergehenden Ansprüche,
**dadurch gekennzeichnet, dass**
das Glas auf mindestens 1.400 °C gebracht wird, um auf das geschmolzene Metall gegossen zu werden.

7. Verfahren nach einem der vorhergehenden Ansprüche,
**dadurch gekennzeichnet, dass**
eine gasförmige Atmosphäre, die ein N₂/H₂-Gemisch enthält, das 1 bis 12 % Wasserstoff als Normvolumen enthält, in der Floatkammer aufrecht erhalten wird.

8. Verfahren nach einem der vorhergehenden Ansprüche,
**dadurch gekennzeichnet, dass**
das Metallbad an der Oberfläche an der Stelle des Glasgusses mehr als 1.150 °C und sogar mehr als 1.250 °C hat.

9. Verfahren nach einem der vorhergehenden Ansprüche,
**dadurch gekennzeichnet, dass**
an der Stelle am Ausgang, wo sich das Glas vom Metall trennt, das Glas eine Temperatur zwischen 730 und 850 °C hat.

10. Verfahren nach einem der vorhergehenden Ansprüche,
**dadurch gekennzeichnet, dass**
das Glas bei einer derartigen Temperatur gegossen wird, dass der dezimale Logarithmus seiner Viskosität in Poise von 3,4 auf 3,9 steigt.

11. Verfahren nach einem der vorhergehenden Ansprüche,
**dadurch gekennzeichnet, dass**
an der Stelle, wo sich das Glas vom Metall trennt, das Glas eine derartige Temperatur hat, dass der dezimale Logarithmus seiner Viskosität in Poise von 11 auf 12 steigt.

12. Verfahren nach einem der vorhergehenden Ansprüche,
**dadurch gekennzeichnet, dass**
der SnO₂-Gehalt des Glases von 0,1 auf 0,5 Gew.-% steigt.

## Claims

1. A process for manufacturing a flat ribbon of precursor glass for a glass-ceramic, comprising the continuous floating of the molten glass on a bath of molten metal in a float chamber, said glass being poured in the molten state at a temperature above its devitrification onset temperature onto the molten metal upstream of the chamber, said glass progressively forming a ribbon that runs along said metal bath, the cooling rate of the glass being at least 18°C/min and less than 48°C/min between, on the one hand, the moment t1 when the glass is at the theoretical temperature for which the devitrification rate is a maximum and, on the other hand, the later moment t2 when the glass is at the theoretical temperature at which the devitrification crystal growth rate becomes less than 1 micron per minute.

2. The process as claimed in the preceding claim, **characterized in that** the cooling rate of the glass is less than 40°C/min between t1 and t2.

3. The process as claimed in the preceding claim, **characterized in that** the cooling rate of the glass is less than 30°C/min between t1 and t2.

4. The process as claimed in the preceding claim, **characterized in that** the cooling rate of the glass is less than 28°C/min between t1 and t2.

5. The process as claimed in one of the preceding claims, **characterized in that** the glass is heated to at least 1380°C in order to be poured onto the molten metal.

6. The process as claimed in the preceding claim, **characterized in that** the glass is heated to at least 1400°C in order to be poured onto the molten metal.

7. The process as claimed in one of the preceding claims, **characterized in that** a gaseous atmosphere comprising an N₂/H₂ mixture containing 1 to 12% hydrogen in normal volume is maintained in the float chamber.

8. The process as claimed in one of the preceding claims, **characterized in that** the metal bath is at more than 1150°C, even above 1250°C, on the surface at the point where the glass is cast.

9. The process as claimed in one of the preceding claims, **characterized in that** at the point downstream where the glass separates from the metal, the glass has a temperature of between 730 and 850°C.

10. The process as claimed in one of the preceding claims, **characterized in that** the glass is cast at a temperature such that the logarithm to the base 10 of its viscosity in poise ranges from 3.4 to 3.9.

11. The process as claimed in one of the preceding claims, **characterized in that**, at the point where the glass separates from the metal, the glass has a temperature such that the logarithm to the base 10 of its viscosity in poise ranges from 11 to 12.

12. The process as claimed in one of the preceding claims, **characterized in that** the SnO₂ content of the glass ranges from 0.1 to 0.5% by weight.
